# EUROPÄISCHE PATENTSCHRIFT

(11) **EP 0 389 501 B1**
(45) Veröffentlichungstag und Bekanntmachung des Hinweises auf die Patenterteilung: **13.04.1994**
(21) Anmeldenummer: 88909099.9
(22) Anmeldetag: 22.10.1988
(51) Int. Cl.: G01S 17/88, E01C 23/01, B60G 23/00

(54) **VERFAHREN ZUM ERKENNEN DES ZUSTANDES EINER STRASSE**
PROCESS FOR DETERMINING THE CONDITION OF A ROAD
PROCEDE DE RECONNAISSANCE DE L'ETAT D'UNE ROUTE

(30) Priorität: 11.11.1987 DE 3738221
(43) Veröffentlichungstag der Anmeldung: 03.10.1990
(73) Patentinhaber: TEMIC TELEFUNKEN microelectronic GmbH, 74072 Heilbronn (DE); Bayerische Motoren Werke Aktiengesellschaft, 80788 München (DE)
(72) Erfinder: SPIES, Hans, D-8068 Pfaffenhofen (DE); WEISHAUPT, Walter, D-8000 München (DE)
(74) Vertreter: Maute, Hans-Jürgen, Dipl.-Ing.
(86) Internationale Anmeldenummer: EP8800950
(87) Internationale Veröffentlichungsnummer: WO8904498

(56) Entgegenhaltungen:
- DE-A- 3 447 015
- US-A- 4 653 316
- Patent Abstracts of Japan,Vol.8,Nr.109,p275,abstract from JP 59-17182,publ 1984-01-28

## Beschreibung

Die Erfindung betrifft ein Verfahren zum Erkennen des Zustandes einer Straße, nach dem Oberbegriff des Anspruchs 1.

Bisher bekannte Geräte ermöglicher mit Hilfe komplexer Rechenoperationen unter günstigen Umweltbedingungen und mit aufwendigem Abbildesystem ein CCD-Bild von einem bestimmten Fahrbahnbereich zu gewinnen. Ein solches Bild gestattet jedoch keinerlei Aussage bezüglich der Entfernung z.B. einer abgebildeten Unebenheit der Fahrbahnoberfläche zu treffen.

Andererseits sind Entfernungsmesser nach dem Prinzip der Laufzeitmessung von Signalen, die Objekte anpeilen bzw. Punkt für Punkt abtasten, seit längerem bekannt (vgl. DE 32 19 423 A 1, DE 34 47 015 A1).

Aufgabe der Erfindung ist es, ein Verfahren zum Erkennen des Zustandes einer Straße gemäß dem Oberbegriff des Patentanspruchs 1 anzugeben, das bzw. die auf einfache Weise ein Abbild für den Fahrbahnoberflähenzustand liefert und zugleich - insbesondere bei Unebenheiten - eine Aussage über deren relative Lage/Entfernung.

Die Lösung dieser Aufgabe ist erfindungsgemäß im Patentanspruch 1 enthalten.

Aus- und Weiterbildungen der Erfindung sind weiteren Ansprüchen sowie der Beschreibung und Zeichnung von Ausführungsbeispielen zu entnehmen.

Die Erfindung weist eine ganze Reihe von Vorteilen auf.

Wenn bei der Ausführung der Erfindung nur ein Sender und ein Empfänger verwendet wird, erfolgt mit Vorteil die Energieverteilung des Senders über die gesamte abzutastende Entfernung derart, daß die rückgestreute Energie aus jedem Entfernungsbereich bei gleichem Rückstreukoeffizient etwa gleich ist.

Werden gemäß einer anderen Ausführung der Erfindung mehrere Sender und Empfangseinrichtungen so auf die Fahrbahn abgebildet, daß durch Auswerten der Unterschiede der Rückstreusignale eine geometrische Zuordnung der Änderung der Signale und damit auch eines Fahrbahnrandes erfolgt.

Im Gegensatz zum Stand der Technik wird bei der Erfindung ein Fahrbahnprofil detektiert und zugleich erfolgt eine geometrische bzw. entfernungsmäßige Zuordnung dieses abgebildeten Profils.

Mit Vorteil kann ein Fahrbahnprofil bei der Erfindung - bevorzugt nach einer Plausibilitätskontrolle - am Armaturenbrett des Fahrzeugs, bevorzugt einem Bordcomputer, zur Anzeige gebracht werden.

Das erfindungsgemäße Verfahren kann jedoch auch dazu benutzt werden eine Einrichtung zu schaffen, die zum Zu- oder Abschalten von Antriebskomponenten des Fahrzeugs und/oder der Fahrzeugaufhängung und Dämpfung dienen. Eine elektronische Dämpferkontrolle erlaubt es, das Fahrwerk auf die unterschiedlichen Straßenverhältnisse, welche detektiert wurden, einzustellen. Dabei kann in an sich bekannter Weise zur Fahrwerksregelung jeder Parameter, der das Niveau des Fahrzeugs beeinflußt, herangezogen werden, beispielsweise das dynamische Verhalten von Stoßdämpfern oder das Fließverhalten eines Fluids, wie Gas in Gasfedern oder einer Flüssigkeit in Hydraulikzylindern. Mit Vorteil werden weitere Bedingungen, insbesondere Zustandsvariablen des Fahrzeugs erfaßt und vom Prozessor berücksichtigt (adaptive Regelung).

Das erfindungsgemäße Verfahren ist bei geeigneter Anordnung am Fahrzeug im Frontbereich in der Lage eine Fahrbahnglätte (Wasserglätte) zu detektieren. In Fahrtrichtung ist sie zur Profilaufzeichnung im Bereich von ∼ 1 m bis 50 m gut anwendbar.

Die Erfindung ist nicht auf eine bestimmte Sensoranordnung festgelegt. Sie kann auch Bereiche unterhalb eines Meters detektieren, z.B. unterhalb einer Radachse wie Vorderradachse eines Kraftfahrzeuges.

In den beigefügten Zeichnungen ist die Erfindung rein schematisch dargestellt und wird anhand dieses Ausführungsbeispiel nachfolgend erläutert. Es zeigen:
- Fig. 1: ein Fahrzeug mit Einrichtung zum Erkennen des Zustandes einer Straße;
- Fig. 1a: zugehöriger Signalverlauf zu Fig. 1;
- Fig. 2: eine andere Ausführungsform der Einrichtung mit räumlich getrennten Teilfächen;
- Fig. 2a und Fig. 2b: zugehöriger Signalverlauf zu Fig. 2;
- Fig. 3: eine Einrichtung zum Erkennen von Wasserpfützen o.ä. Fahrbahnglätte;
- Fig. 4: ein Blockschaltbild der prozessorgesteuerten Funktionen.

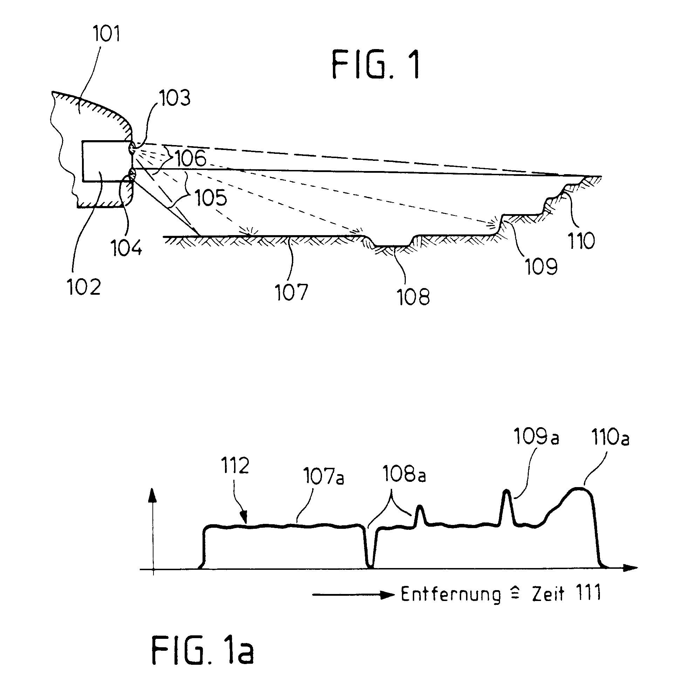

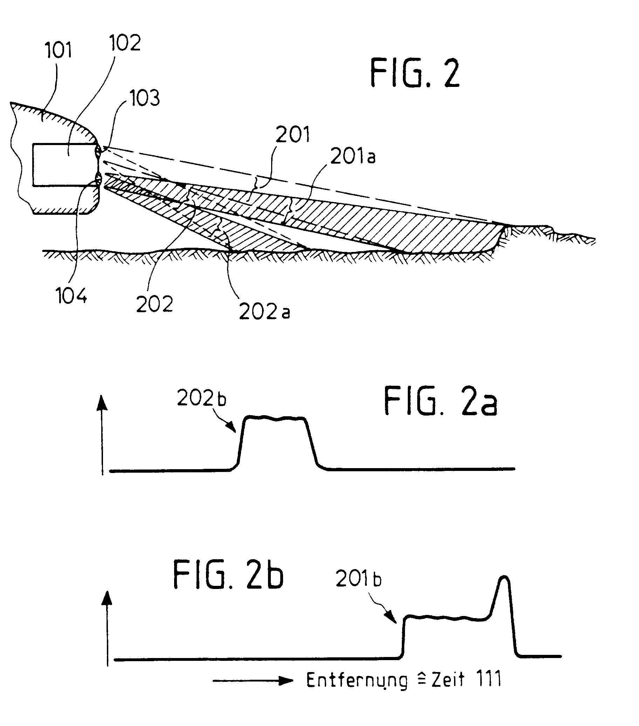

In den Fig. 1 und 2 ist das Fahrzeug 101 nur in Teilbereichen seines Umrisses dargestellt. Dort ist im Frontbereich - etwa neben dem vorderen rechten Scheinwerfer - ein Sensor 102 zur Erkennung eines Fahrbahnzustandes einschließlich des Fahrbahnrandes eingebaut.

Der Einbauort kann je nach bevorzugten Zweck der Anwendung bzw. gewünschtem Erkennungsbereich variiert werden. Gleiches gilt für den Neigungswinkel zur Fahrbahn (Elevationswinkel) und den Winkel zur Fahrtrichtung bzw. Fahrzeuglängsachse (Azimut).

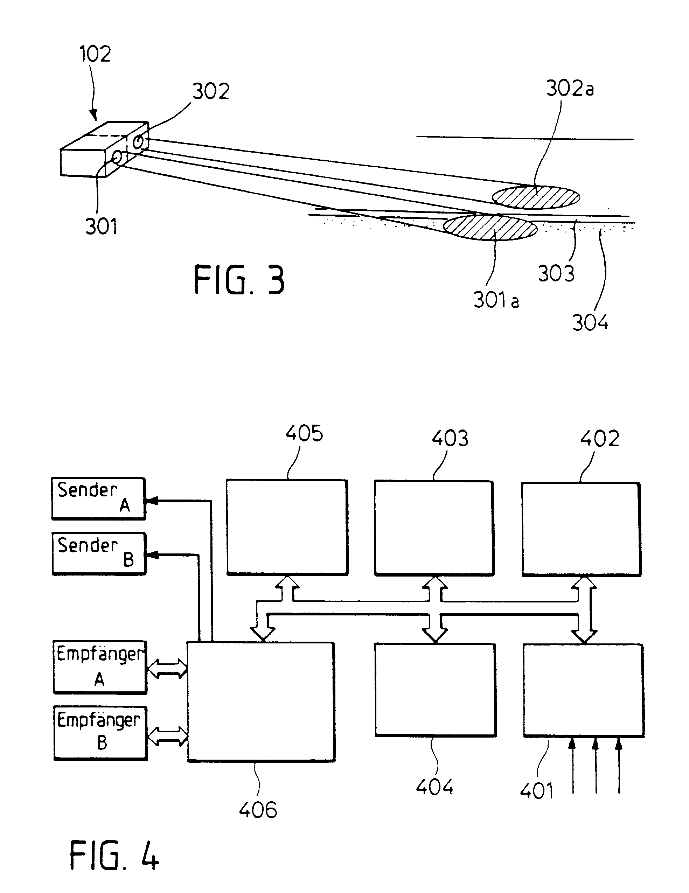

Sender 103 und Empfänger 104 sind in Fig. 1 und 2 in einem gemeinsamen Gehäuse untergebracht (übereinander angeordnet), sie können jedoch auch nebeneinander zusammen (Fig. 3) oder getrennt - nicht dargestellt - angeordnet sein.

Wie Fig. 1 zeigt, überlappt sich der Bereich der Rückstreuung 105 mit demjenigen der vom Sender 103 ausgesandten Strahlung 106.

Die im Empfänger 104 eingefangene Rückstreuleistung wird verstärkt und generiert Signale, deren Form (Amplitude) und Größe/Abstände digital und insbesondere inkremental in einer Auswerteschaltung (Logik bzw. Prozessor) ausgewertet wird.

Fig. 1a zeigt einen typischen Signalverlauf, aufgetragen als Entfernung über der Zeit 111.

Der Signalverlauf korrespondiert mit den in Fig. 1 abgebildeten Straßenverlauf. Die Straße 107 weist einen im wesentlichen ebenen, glatten Bereich auf, der fast ebenso glatten Signalen 107a entspricht. Eine Vertiefung 108 in der Fahrbahn ist an den zugehörigen peakes 108a erkennbar und ein Bordstein 109 zu peak 109a. Ein Randbewuchs 110 am Fahrbahnrand generiert Signale 110a mit entsprechenden Amplituden.

Für die Auswertung kann das Empfangssignal vor oder nach der Differenzierung in zeitlich lückenlos aneinander anschließende Zeitabschnitte aufgeteilt werden. Zur Differenzierung können zwei oder mehr zeitlich getastete Empfangstore vorgesehen sein mit Integratoren und Differenzierschaltung.

Wie Fig. 2 zeigt, können zwei oder mehrere Sendekeulen 201 und 202 voneinander beabstandet gebildet werden, so daß sich diesen zugeordnete Empfangsbereiche 201a und 202a der Rückstreuung ausbilden, die nach Signalverarbeitung und Auswertung nach dem Prinzip der Laufzeitmessung ihrer jeweiligen Laufzeiten von der Fahrbahn zum Empfänger in einer oder mehreren Signalverarbeitungseinheiten leicht separiert werden können und damit eine geometrische Lagebestimmung von Unebenheiten o.ä. ermöglichen.

Dabei zeigt Fig. 2a die Rückstreuleistung 202b von der Sendekeule 202 und Fig. 2b bei 201b die Rückstreuleistung von der Sendekeule 201 als zugehöriger Signalverlauf zu Fig. 2.

Bei sich überlappenden Teilflächen der Rückstreuung kann anhand der überlappenden Bereiche eine Justierung erfolgen, die die Auswertung erleichtert bzw. präzisiert.

Wenn die Anordnung zur Sensierung von Wasser- oder ähnlichen glatten Oberflächen (-bereichen) dienen soll, wird eine Ausführung nach Fig. 3 bevorzugt. Bei der Auswertung der Signalform/-abstände, Amplituden, Pulsbreite und/oder des Amplituden/Zeit-Integrals lassen sich entsprechend glatte Signale (vgl . 107a in Fig. 1a) leicht erkennen und separieren.

Ein Sende- und Empfangsgerät 302 kann dabei auf die Fahrbahn bei 302a und ein weiteres Gerät 301 auf den Fahrbahnrand bei 301a gerichtet sein zur Gewinnung entsprechender Signale rückgestreuter Leistung (vgl . Fig. 2a und 2b).

Wie im Beispiel der Fig. 2 wird auch gemäß Fig. 3 durch Auswerten der Laufzeitunterschiede der Rückstreusignale eine geometrische Zuordnung - hier etwa einer Wasserpfütze, Eis o.ä. - ermöglicht; im Gegensatz zum Beispiel der Fig. 1, wo die Energieverteilung über die Fahrbahnoberfläche so erfolgt, daß die rückgestreute Energie aus jedem Entfernungsbereich bei gleichem Rückstreukoeffizient etwa gleich ist.

Wie Fig. 4 zeigt, läuft die prozessorgesteuerte Funktion wie folgt ab:
Von der Peripherie des - vorgzugsweise - Mikroprozessors werden über eine Schnittstelle 401 ausgewählte Daten, wie Lenkeinschlag (Winkel an den Rädern), Bremsenbetätigung bzw. Druckänderung im Bremssystem, Beschleunigung, ggf. Geschwindigkeit u.a. zugeführt.

Über Datenbus hiermit verbunden sind ein Kurzzeitspeicher 402 für Meßwertabweichungen, um eine Adaption zu ermöglichen.

Eine Auswertung mit Kontrolle der Plausibilität des erfaßten Fahrbahnprofils und der Entfernung von Oberflächenbesonderheiten erfolgt im Baustein 403, die Anzeige derselben im Baustein 404.

Mit 405 ist ein Festwertspeicher für Signaturen - Profile bzw. deren Abweichungen, wie Randstein, Pfützen usw. - bezeichnet. Dessen Werte werden mit dem Baustein 406, der als Signalverarbeitungs- und Auswerteeinheit dient, insbesondere für Laufzeiten und Amplituden bzw. Amplituden/Zeitverlauf korreliert.

Sämtliche Bausteine sind bevorzugt Teil einer integrierten Schaltung.

Mit Baustein 406 ist je ein Empfänger A und B für die rückgestreute Energie und je ein Sender A und B für insbesondere Lichtimpulse in an sich bekannter Weise verbunden (vgl . den eingangs erwähnten Stand der Technik). Dabei kann sowohl mit Laser-Lichtimpulsen als auch mit IR-Strahlung gearbeitet werden, letzteres wenn geringes Rauschen wichtig ist.

Der Prozessor gemäß Fig. 4 ist lernfähig zur Festlegung verwertbarer Nutzsignale ausgebildet und nimmt mit Hilfe eines Festwertspeichers eine Adaption an bestimmte Straßenverhältnisse, wie Beschaffenheit einer Straßendecke oder Witterungseinflüsse, wie Regen, Eis und Schnee vor.

Der Prozessor kann auch Co-Prozessor einer CPU oder ähnlicher computergesteuerten Einrichtung zur Fahrwerkskontrolle, insbesondere Niveauregelung eines oder mehrerer Räder eines Fahrwerks im Hinblick auf ihre Aufhängung bzw. Abstützung und/oder auf ihre Antriebskomponenten/Zu- bzw. Abschaltung sein.

Eine elektrische Dämpferkontrolle ist z.B. in ATZ 89 (1987) 9, S. 471 ff. beschrieben, die Zu- und Abschaltung von Antriebselementen in der DE 35 05 455 A1.

## Patentansprüche

1. Verfahren zum Erkennen des Zustands einer Straße, insbesondere Unebenheiten an der Oberfläche und am Rande der Straße und deren Entfernung zu einem Fahrzeug, mit Hilfe elektromagnetischer Strahlung, wie Licht, die ein Sender als Impulse unter verschiedenen Neigungswinkeln zur Fahrbahn, d.h. in Elevation aussendet und ein Empfänger reflektierte Impulse empfängt und in Signale umsetzt, die einer Signal Verarbeitungs- und Auswerteeinheit zugeführt werden, **dadurch gekennzeichnet,** daß
- der/die Sender Impulse auch in variierbaren Winkeln zur Fahrtrichtung, d.h. im Azimut, zeitlich getaktet bzw, getastet als Sendekeulen auf unterschiedliche Bereiche der Straßenoberfläche und deren Rand aussendet, und
- der Empfänger zur Profilaufzeichnung von den angestrahlten Bereichen rückgestreute Impulse empfängt und in zeitlich aufeinanderfolgenden Abschnitten erfaßt und in der Signalverarbeitungs- und Auswerteeinheit je nach Entfernung zum Fahrzeug erkennt, zusammensetzt und aufzeichnet.

2. Verfahren zum Erkennen des Zustandes einer Straße, nach Anspruch 1 **dadurch gekennzeichnet,** daß die Sender und Empfänger mit einem Prozessorbaustein (406) verbunden werden, in dem die in einem Festwertspeicher (405) gespeicherten Signaturen bekannter Straßenprofile (Randstein, Pfützen) mit der Profilaufzeichnung der reflektierten Meßstrahlen korreliert werden.

3. Verfahren nach Anspruch 2, **dadurch gekennzeichnet,** daß mittels Prozessorbaustein (406), der eine Adaptionselektronik (402) aufweist, eine Adaption von Meßwerten vorgenommen wird, welche während der Fahrt von einer Fahrzeugschnittstelle (Baustein 401) laufend zugeführt werden.

4. Verfahren nach Anspruch 2, **dadurch gekennzeichnet,** daß mit dem Prozessorbaustein (406) ein Baustein (403) zur Kontrolle der Plausibilität des erfaßten Profils an der Straßenoberfläche oder am Straßenrand verbunden wird, sowie eine Profilanzeige (im Baustein 404) am Armaturenbrett des Fahrzeugs erfolgt.

5. Verfahren nach Anspruch 2, **dadurch gekennzeichnet,** daß die Auswertung im Prozessor (Fig. 4) derart erfolgt, daß zeitlich lückenlos aneinander anschließende Bereiche nacheinander erfaßt und angezeigt werden (im Baustein 404) im Bereich der Entfernung zum Fahrzeug von ungefähr 1 m bis ungefähr 50m.

6. Verfahren nach Anspruch 2, **dadurch gekennzeichnet,** daß Strahlung bestimmter Art, Impulse bestimmter Art in vorbestimmten Winkelbereichen in Azimut und Elevation ausgesendet werden (von Sendern 103).

7. Verfahren nach Anspruch 2, **dadurch gekennzeichnet,** daß die Sender (103) ihre Strahlungsimpulse in Zeitbereichen aussenden, die sich zeitlich überlappen und daß anhand der Überlappungen eine Justierung der Anzeige (in Baustein 404) der Entfernung erfolgt.

8. Verfahren nach Anspruch 2, **dadurch gekennzeichnet,** daß nach Korrelation im Prozessorbaustein (406) den von Empfängern (104) empfangenen Meßstrahlen (105) und ihrer zeitlichen/entfernungsmäßigen Zuordnung mittels Plausibilitätskontrolle (Baustein 403) vom Prozessor (Fig. 4) oder Coprozessor, Maßnahmen zum Steuern von Komponenten des Fahrwerks oder des Antriebs eingeleitet werden.

## Claims

1. A process for identifying the state of a road, particularly regions of unevenness on the surface and at the edges of the road and their distance from a vehicle, with the aid of electromagnetic radiation such as light, in which a transmitter emits pulses at various angles of inclination to the roadway, i.e. elevation, and a receiver receives reflected pulses and converts them into signals which are fed to a signal processing and evaluation unit, characterised in that
- the transmitter/transmitters also emits/emit pulses to different regions of the road surface and its edges at variable angles to the direction of travel, i.e. azimuth, clock-pulsed or keyed as transmitted beams, and
- the receiver receives back-scattered pulses for recording the profile of the irradiated regions, detects the pulses in temporally successive sections, and the pulses are identified, put together and recorded in the signal processing and evaluation unit depending on the distance from the vehicle.

2. A process for identifying the state of a road according to claim 1, characterised in that the transmitter and receiver are connected to a processor component (406) in which the signatures of known road profiles (kerbstones, puddles), which are stored in a fixed value memory (405), are correlated with the profile recording from the reflected measuring beams.

3. A process according to claim 2, characterised in that adaptation of the measured values is effected by means of the processor component (406), which comprises adaptation electronics (402), which adaptation is effected continuously during the journey by a vehicle interface (component 401).

4. A process according to claim 2, characterised in that a component (403) for checking the plausibility of the recorded profile at the road surface or at the road edge is connected to the processor component (406), and the profile is indicated (in component 404) on the instrument panel of the vehicle.

5. A process according to claim 2, characterised in that the evaluation in the processor (Figure 4) is effected in such a way that regions following each other continuously in time are successively recorded and indicated (in component 404) within a range of distance from the vehicle from about 1 m to about 50 m.

6. A process according to claim 2, characterised in that radiation of a certain type or pulses of a certain type are emitted (from transmitters 103) within predetermined angular ranges of azimuth and elevation.

7. A process according to claim 2, characterised in that the transmitters (103) emit their radiation pulses in time domains which temporally overlap each other, and that an adjustment of the indication (in component 404) of the distance is made by means of the overlap.

8. A process according to claim 2, characterised in that after the correlation in the processor component (406) by the processor (Figure 4) or coprocessor of the measuring beams (105) received by the receivers (104) and their time/distance association by means of a plausibility check (component 403), measures are introduced for controlling components of the travelling mechanism or drive.

## Revendications

1. Procédé de reconnaissance de l'état d'une route, notamment des déformations de la surface et du bord de la route et de la distance de ces déformations par rapport au véhicule, au moyen d'un rayonnement électromagnétique, tel que de la lumière, qui est émise par un émetteur sous différents angles d'inclinaison par rapport à la chaussée, c'est-à-dire en élévation, un récepteur recevant les impulsions réfléchies et les transformant en signaux qui sont transmis à une unité de traitement et d'exploitation, caractérisé par le fait que
- l'émetteur/les émetteurs émet(tent) également des impulsions sous des angles variables par rapport à la direction de déplacement du véhicule, c'est-à-dire en azimut, de manière synchronisée ou cadencée, sous forme de lobes d'émission en direction de différentes zones de la surface et du bord de la route et
- en vue de tracer le profil, le récepteur reçoit des impulsions réfléchies par les zones illuminées, les agence par séquences successives qui sont identifiées, combinées et enregistrées par l'unité de traitement et d'exploitation en fonction de la distance par rapport au véhicule,.

2. Procédé selon la revendication 1, caractérisé par le fait que les émetteurs et les récepteurs sont reliés à un ensemble processeur (406) dans lequel les signatures de profils de route connus (bordure, flaques) stockées dans une mémoire morte (405) sont corrélées avec le profil tracé à partir des rayons de mesure.

3. Procédé selon la revendication 2, caractérisé par le fait qu'au moyen de l'ensemble processeur (406) qui comporte une électronique d'adaptation (402), on procède à une adaptation de valeurs de mesure qui sont transmises en continu par une interface du véhicule (élément 401) pendant le déplacement.

4. Procédé selon la revendication 2, caractérisé par le fait qu'un élément (403) de contrôle de la plausibilité du profil détecté de la surface ou du bord de la route est relié à l'ensemble processeur (406) et par le fait que le profil est affiché sur tableau de bord du véhicule (élément 404).

5. Procédé selon la revendication 2, caractérisé par le fait que le traitement dans le processeur (figure 4) est réalisé de manière telle que des zones qui se succèdent sans trou dans le temps soient traitées successivement et affichées (sur l'élément 404) dans la plage de distance comprise entre environ 1 m et environ 50 m par rapport au véhicule.

6. Procédé selon la revendication 2, caractérisé par le fait qu'un rayonnement de type particulier, des impulsions de type particulier sont émis à l'intérieur de plages angulaires prédéterminées en azimut et en élévation.

7. Procédé selon la revendication 2, caractérisé par le fait que les émetteurs (103) envoient les impulsions dans des plages de temps qui se chevauchent et par le fait que l'on opère, à l'aide de ces chevauchements, un réglage de l'affichage de la distance (sur l'élément 404).

8. Procédé selon la revendication 2, caractérisé par le fait qu'après corrélation dans l'élément processeur (406) des rayons de mesure (105) reçus par les récepteurs (104) et leur rattachement du point de vue du temps/de la distance par contrôle de plausibilité (élément 403), le processeur (figure 4) ou le coprocesseur déclenche des mesures de commande de composants du train de roulement ou de l'appareil propulsif.
